# EUROPEAN PATENT APPLICATION

(11) **EP 4 521 609 A1**
(43) Date of publication of application: **12.03.2025**
(21) Application number: 23814696.3
(22) Date of filing: 09.03.2023
(51) Int. Cl.: H02K 5/10

(54) **ELECTRIC MOTOR AND ELECTRICAL DEVICE**

(30) Priority: 01.06.2022 CN 202210617201; 01.06.2022 CN 202210617204
(71) Applicant: Welling (Wuhu) Motor Manufacturing Co., Ltd., Wuhu, Anhui 241009 (CN)
(72) Inventor: LUO, Peiyuan, Wuhu, Anhui 241009 (CN); ZHENG, Licheng, Wuhu, Anhui 241009 (CN); WU, Di, Wuhu, Anhui 241009 (CN)
(74) Representative: Ran, Handong
(86) International application number: PCT/CN2023/080619
(87) International publication number: WO 2023/231498

(57) **Abstract**

Disclosed in the present application are an eclectic motor and an electrical device. The electric motor comprises a stator assembly (100), an end cover and a wire fixing clamp (600). The stator assembly (100) comprises a plastic package housing (110), wherein the end of the plastic package housing (110) in the axial direction of the stator assembly (100) is opened to form an opening. The end surface of the plastic package housing (110) located at the opening is a first end surface (131), and a side wall of the plastic package housing (110) is provided with a wire passing groove (140), which extends, from the first end surface, in the axial direction of the stator assembly (100); the end cover covers the opening, and the wire fixing clamp (600) is an elastic member and is arranged in the wire passing groove (140) for fixing a wire, the end surface of the wire fixing clamp (600) facing the end cover is a second end surface (610), and the second end surface (610) protrudes, in the axial direction of the stator assembly (100), relative to the first end surface (13 1), such that the wire fixing clamp (600) is deformed by means of being pressed by the end cover, so as to seal the wire passing groove (140).

## Description

### CROSS-REFERENCE TO RELATED APPLICATIONS

This application claims the priority of Chinese patent applications No. 202210617201.0 filed on June 01, 2022 and entitled "ELECTRIC MOTOR AND ELECTRIC DEVICE", and No. 202210617204.4 filed on June 01, 2022 and entitled "ELECTRIC MOTOR AND ELECTRIC DEVICE," the disclosures of which are incorporated herein by reference in their entirety.

### TECHNICAL FIELD

The present application relates to the technical field of electric motors, and more particularly to an electric motor and an electric device.

### BACKGROUND

In the existing technology, brushless motors may experience water ingress under harsh conditions such as rain, particularly at the outlet terminal of the motor, resulting in decreased performance or even inability to function properly.

### SUMMARY

The present application aims to solve at least one of the technical problems existing in the related art. In view of this, the present application provides an electric motor.

The present application further provides an electric device including the electric motor described above.

The electric motor according to an embodiment of a first aspect of the present application includes:
a stator assembly, including a plastic-molded casing which is open at an end in an axial direction of the stator assembly to form an opening, where an end face of the plastic-molded casing at the opening is a first end face, and the plastic-molded casing, on a side wall thereof, is provided with a wire trough extending in the axial direction of the stator assembly from the first end face;
an end cover, arranged to cover the opening; and
a wire clamp, which is an elastic member and arranged in the wire trough for securing wires, where an end face of the wire clamp facing the end cover is a second end face, and the second end face protrudes with respect to the first end face in the axial direction of the stator assembly, allowing the wire clamp to deform under pressure from the end cover to seal the wire trough.

According to some embodiments of the present application, the second end face has a protrusion height with respect to the first end face, h, satisfying: h ≥ 0.5 mm.

According to some embodiments of the present application, in a radial direction of the stator assembly, the wire clamp, on a side thereof, is provided with a first limiting part engaging with an outer side wall of the plastic-molded casing, and on another side thereof, is provided with a second limiting part engaging with an inner side wall of the plastic-molded casing.

According to some embodiments of the present application, a first groove is formed between the first limiting part and the second limiting part, and a bottom surface of the first groove fits an inner wall of the wire trough.

According to some embodiments of the present application, the plastic-molded casing, on the inner side wall thereof, is provided with a second groove for receiving the second limiting part at a position close to the wire trough, and in the radial direction of the stator assembly, the second limiting part has a thickness smaller than a depth of the second groove.

According to some embodiments of the present application, a first chamfer structure is arranged between the inner wall of the wire trough and the outer side wall of the plastic-molded casing, and a second chamfer structure is arranged between the inner wall of the wire trough and the inner side wall of the plastic-molded casing.

According to some embodiments of the present application, the wires constitute a wire harness, and the wire clamp and the wire harness are formed in an integral structure through injection molding.

According to some embodiments of the present application, the wire clamp is made of silicone or rubber.

According to some embodiments of the present application, the wire clamp has an elastic modulus, e, satisfying: 1.2 MPa ≤ e ≤ 5.4 MPa.

According to some embodiments of the present application, the wire clamp has a hardness, c, satisfying: 30 HA ≤ c ≤ 70 HA.

An electric device according to an embodiment of a second aspect of the present application includes the electric motor according to the embodiment of the first aspect described above.

An electric motor according to an embodiment of a third aspect of the present application includes:
a stator assembly, including a plastic-molded casing, where the plastic-molded casing is open at an end in an axial direction of the stator assembly to form an opening;
a first end cover, arranged to cover the opening;
a second end cover, arranged at an end of the plastic-molded casing away from the first end cover; and
a conductive member, of which one end is fixed on an end face of the plastic-molded casing at the opening and electrically connected to the first end cover, another end is electrically connected to the second end cover, and where a sealing structure is provided between the first end cover and the end face.

According to some embodiments of the present application, the end face is provided with a retention slot spaced from an inner side wall of the plastic-molded casing, and the conductive member has an end secured in the retention slot.

According to some embodiments of the present application, the conductive member includes a first bent section extending from an outer side wall of the plastic-molded casing to the retention slot, and a second bent section located in the retention slot and in an interference fit with the retention slot.

According to some embodiments of the present application, a distance, h, between the retention slot and the inner side wall of the plastic-molded casing, satisfies: h ≥ 1 mm.

According to some embodiments of the present application, the plastic-molded casing is provided with an annular flange at the opening, the first end cover is provided with an installation groove in an interference fit with the flange, the end face is formed on a surface of the flange in the axial direction of the stator assembly, and the sealing structure is positioned between a groove bottom of the installation groove and the end face.

According to some embodiments of the present application, the sealing structure comprises a sealing member made of silicone or rubber.

According to some embodiments of the present application, the sealing structure includes a sealing member having a hardness, c, which satisfies: 30 HA ≤ c ≤ 50 HA.

According to some embodiments of the present application, the sealing structure is an adhesive material disposed between the groove bottom of the installation groove and the end face.

According to some embodiments of the present application, the groove bottom of the installation groove is a first sealing surface, the end face is a second sealing surface, and the first sealing surface fits against the second sealing surface to form the sealing structure.

According to some embodiments of the present application, the conductive member is provided with a convex elastic piece positioned on an outer side of the plastic-molded casing and abutting against a side wall of the installation groove.

An electric device according to an embodiment of a fourth aspect of the present application includes the electric motor according to the embodiment of the third aspect described above.

Additional features and advantages of the present application will be set forth in the subsequent description, and in part will become apparent from the description, or may be learned by practice of the present application.

### BRIEF DESCRIPTION OF DRAWINGS

The above and/or additional aspects and advantages of the present application will become apparent and readily understood from the description of embodiments made in conjunction with the following accompanying drawings, in which:
FIG. 1 is an exploded view of an electric motor according to an embodiment of the present application;
FIG. 2 is a schematic diagram of an assembly structure of an electric motor according to an embodiment of the present application;
FIG. 3 is an enlarged view of C in FIG. 2 of the present application;
FIG. 4 is a sectional view of an electric motor according to an embodiment of the present application;
FIG. 5 is a schematic diagram of a wire clamp according to an embodiment of the present application;
FIG. 6 is a schematic diagram of a stator assembly according to an embodiment of the present application;
FIG. 7 is an enlarged view of D in FIG. 6 of the present application;
FIG. 8 is a schematic diagram of a stator assembly from a different angle according to an embodiment of the present application;
FIG. 9 is a diagram showing a corresponding relationship between a hardness of a wire clamp and a bonding force of a first end cover according to the present application;
FIG. 10 is a sectional view of an electric motor according to an embodiment of the present application;
FIG. 11 is an enlarged view of A in FIG. 1 of the present application;
FIG. 12 is an enlarged view of B in FIG. 1 of the present application;
FIG. 13 is an enlarged view of E in FIG. 10 of the present application;
FIG. 14 is a sectional view of an electric motor according to another embodiment of the present application; and
FIG. 15 is an enlarged view of F in FIG. 14 of the present application.

### List of reference numerals:

Stator assembly100; Plastic-molded casing 110; Receiving groove 111; Second groove 112; Opening 120; Flange 130; First end face 131; Retention slot 132; First groove 133; Wire trough 140; First chamfer structure 141; Second chamfer structure 142;
First end cover 200; Installation groove 210; First sealing surface 211;
Second end cover 300;
Sealing member 400;
Conductive member 500; First bent section 510; Second bent section 520; Elastic piece 530;
Wire clamp 600; Second end face 610; First limiting part 620; Second limiting part 630; First groove 640;
Wire harness 700;
Rotor assembly 800; Bearing 810;
Electric motor 1000.

### DETAILED DESCRIPTION

Embodiments of the present application will be described in detail below. Examples of the embodiments are illustrated in the accompanying drawings, where the same or like reference numerals throughout the figures indicate the same or like elements having the same or like functions. The embodiments described below with reference to the accompanying drawings are exemplary and are intended only to explain the present application instead of being construed as limiting the present application.

In the description of the present application, it should be understood that orientation or positional relationships indicated by terms such as "up" and "down" are based on the orientation or positional relationships shown in the accompanying drawings, and are to facilitate the description of the present application and simplify the description only, rather than indicating or implying that the device or element referred to must have a specific orientation or be constructed and operated in a specific orientation, and therefore cannot be construed as limiting the present application.

In the description of the present application, the use of terms such as "first" and "second" is solely used for the purpose of distinguishing technical features and should not be construed as indicating or implying relative importance or implicitly indicating the number of indicated technical features or implicitly indicating the sequence of indicated technical features.

In the description of the present application, it is to be noted that the terms such as "arrange", "install", and "connect" should be construed in a broad sense, and those skilled in the art can determine the specific meanings of the above terms in the present application in a rational way in conjunction with the specific contents of the technical schemes.

The technical schemes in the embodiments of the present application are clearly and comprehensively described in the following with reference to the drawings. It is obvious that the embodiments described below are only some of the embodiments of the present application and are not all the embodiments.

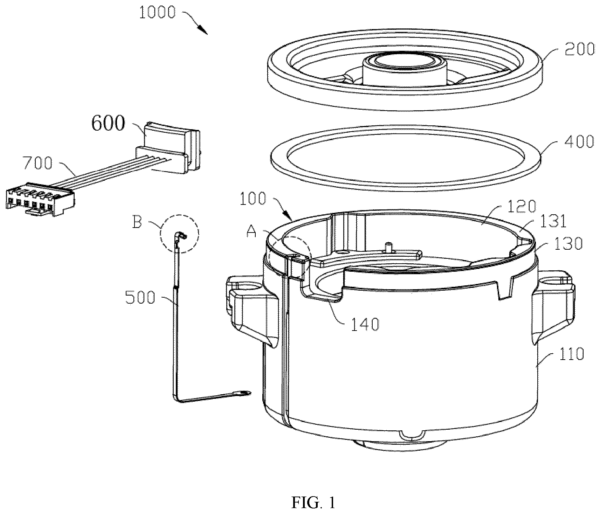

An electric motor 1000 according to an embodiment of the present application will be described with reference to FIGS. 1 to 15, and the electric motor 1000 is specifically a brushless motor, which is applied to household appliances such as air conditioners. Hereinafter, the electric motor 1000 will be described by way of a specific example.

Referring to FIG. 1, the electric motor 1000 provided by the embodiment of the present application includes a stator assembly 100, a first end cover 200, and a second end cover 300. The stator assembly 100 includes a plastic-molded casing 110 formed through injection molding, the plastic-molded casing 110 has an installation space formed inside and arranged to receive a rotor assembly 800. The plastic-molded casing 110 is open at an end in an axial direction of the stator assembly 100, where an opening 120 is formed and in communication with the installation space. During assembly, for the stator assembly 100, the plastic-molded casing 110 is first formed by injection molding, and then components such as the rotor assembly 800 are assembled into the installation space through the opening 120. Here, the first end cover 200 is mounted at an end of the stator assembly 100 where the opening 120 is arranged, the opening 120 is covered by the first end cover 200, and the second end cover 300 is disposed at the other end of the plastic-molded casing 110 away from the first end cover 200. Each of the first end cover 200 and the second end cover 300 is provided with a bearing 810, the rotor assembly 800 includes a rotating shaft, and the rotating shaft is supported by the bearings 810 at two ends, such that the rotor assembly 800 can rotate in the stator assembly 100.

FIG. 1 is an exploded view of the electric motor 1000 in this embodiment. It can be understood that the first end cover 200 matches the opening 120 of the plastic-molded casing 110, allowing the first end cover 200 to cover the opening 120, and the second end cover 300 and the plastic-molded casing 110 form an integral structure through injection molding, such that the first end cover 200 and the second end cover 300 are respectively disposed at two ends of the plastic-molded casing 110 in the axial direction. In this embodiment, the first end cover 200 and the second end cover 300 are both metal parts, and the first end cover 200 and the second end cover 300 are connected by a conductive member 500, such that the first end cover 200 and the second end cover 300 are electrically connected. The conductive member 500 is disposed on an outer side wall of the plastic-molded casing 110.

It should be noted that, in the embodiment, by connecting the first end cover 200 and the second end cover 300 through the conductive member 500, an equivalent capacitance of the electric motor 1000 is reduced, thereby lowering a shaft voltage and reducing electric corrosion. This arrangement prolongs the service life of the bearing 810, facilitating stable and reliable operation of the electric motor 1000.

Specifically, the conductive member 500 is made of a conductive metal material and in a substantially elongated shape, and the conductive member 500 is disposed on the outer side wall of the plastic-molded casing 110. The conductive member 500 has an upper end extending along the outer side wall of the plastic-molded casing 110 to the end face at the opening 120, and a tail end fixed on the end face without extending into the plastic-molded casing 110, so as to prevent the conductive member 500 from impairing the sealing performance between the first end cover 200 and the plastic-molded casing 110 due to the conductive member 500 passing through the side wall of the plastic-molded casing 110. In addition, the conductive member 500 has a lower end of extending along the outer side wall of the plastic-molded casing 110 and connected to the second end cover 300, the lower end of the conductive member 500 does not extend into the plastic-molded casing 110, and the second end cover 300 and the plastic-molded casing 110 are formed integrally through injection molding. Such an arrangement results in a stable and reliable structure with high sealing performance. The electrical connection between the conductive member 500 and the second end cover 300 may be realized in various ways, for example, by riveting, crimping, or the like, which is not limited here.

It can be understood that the use of electric motor 1000 is expending, greater attention should be paid to the reliability of the electric motor 1000 under harsh conditions during the design process of the electric motor 1000, particularly regarding the issue of water ingress at the wire outlet points of the electric motor 1000 under conditions such as rain, which may cause decreased performance or even inability to function properly of the electric motor 1000. In view of the above problems, according to the embodiment of the present application, the optimizations for the assembly structure of the wire clamp 600 and the wire trough 140 are made, effectively enhancing the sealing performance of the electric motor 1000, reducing the incidence of water ingress, and improving the operational reliability of the electric motor 1000.

In detail, the wire clamp 600 in the embodiment is an elastic member, preferably made of an elastic material, and the wire clamp 600 is capable of holding and securing a wire, for example, by separating the wire clamp 600 into upper and lower sections to clamp the wire, or by allowing the wire to pass through the interior of the wire clamp 600. As in the embodiment shown in FIG. 1, a wire harness 700 is consisted of a plurality of wires which are connected into a single unit via a terminal block, and the wire clamp 600 fixes each wire, ensuring that the wire harness 700 is properly positioned as a whole. The wire clamp 600 is installed in the wire trough 140, and by applying pressure to the wire clamp 600, the wire clamp 600 deforms and closely fits against an inner wall of the wire trough 140, creating a seal. This results in effective sealing between the wire clamp 600 and the plastic-molded casing 110, allowing the wire clamp 600 to secure the wire harness 700 as well as to provide sealing functionality.

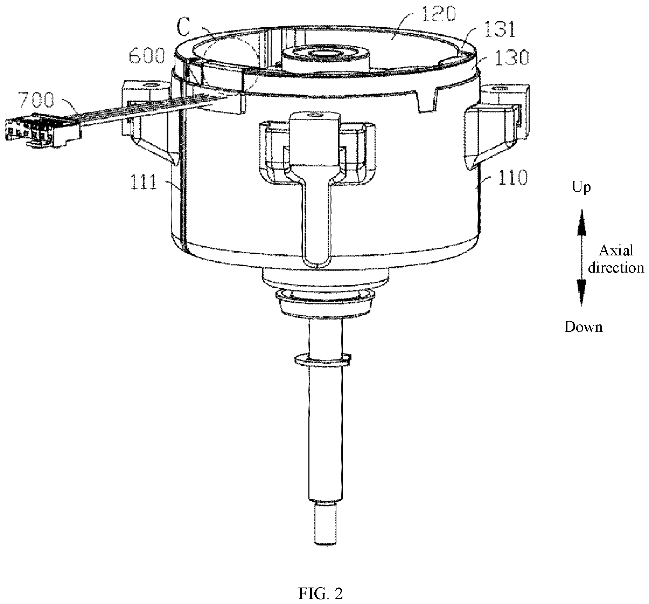

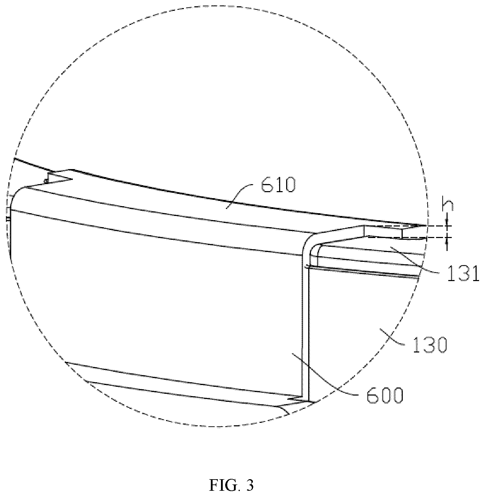

Referring to FIGS. 2 and 3, the end face of the plastic-molded casing 110 at the opening 120 is a first end face 131, and an end face of the wire clamp 600 facing the end cover is a second end face 610. In the axial direction of the stator assembly 100, the wire clamp 600 has a height greater than it of the wire trough 140, the wire clamp 600 is fitted into the wire trough 140, and the second end face 610 protrudes with respect to the first end face 131, that is, there is a height difference between the second end face 610 and the first end face 131. Due to the interference fit between the first end cover 200 and the wire clamp 600 and the relatively low hardness of the wire clamp 600, when the first end cover 200 is placed over the opening 120, the first end cover 200 exerts pressure on the second end face 610 of the wire clamp 600. Under the pressure, the wire clamp 600 deforms, pushing against the inner wall of the wire trough 140, resulting in a tighter fit between the wire clamp 600 and the wire trough 140. The fit provides an effective sealing, enhancing the seal between the wire clamp 600 and the stator assembly 100, significantly reducing the risk of water ingress at the position of the wire trough 140 and improving the operational reliability of the electric motor 1000.

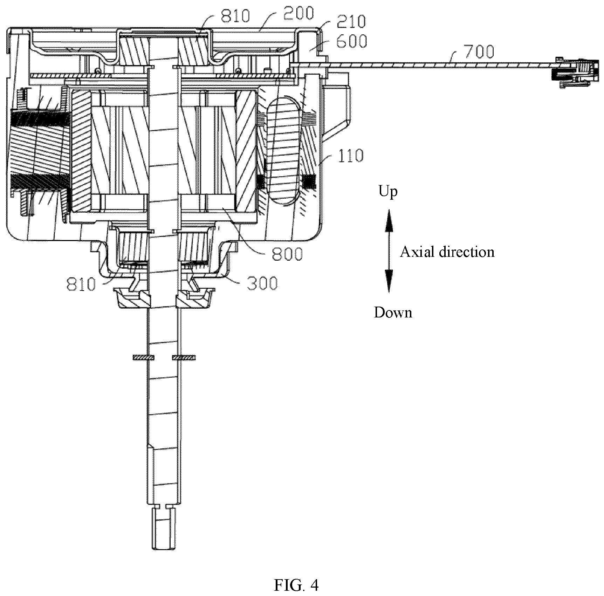

Referring to FIGS. 1, 2 and 4, in some embodiments, the plastic-molded casing 110 is provided with an annular flange 130 at the opening 120, the first end face 131 is arranged on a surface of the flange 130 in the axial direction, an edge of the first end cover 200 is bent circumferentially to form an annular installation groove 210, and the flange 130 is in an interference fit with the installation groove 210. This arrangement allows the first end cover 200 to be securely attached to the flange 130, enabling quick assembly of the first end cover 200 onto the stator assembly 100. FIG. 4 is a sectional view of the electric motor 1000 according to an embodiment. It can be understood with reference to FIG. 4 that while the first end cover 200 is mounted in place, a bottom surface of the installation groove 210 abuts against the second end face 610, and the wire clamp 600 deforms under pressure, whereby a seal is provided between the wire clamp 600 and the plastic-molded casing 110.

Referring to FIG. 1, in some embodiments, a sealing member 400 which is made of silicone or rubber, is disposed between the first end cover 200 and the first end face 131. During assembly, the sealing member 400 is pre-installed in the installation groove 210, and the first end cover 200 is placed over the opening 120, making the flange 130 fit into the installation groove 210. The insertion depth of the flange 130 into the installation groove 210 is controlled by the pressure applied to the first end cover 200, to ensure the upper and lower surfaces of the sealing member 400 to be compressed properly. The lower surface of the sealing member 400 is tightly fitted to the first end face 131 and the second end face 610. The pressure generated by the first end cover 200 compressed will act on the first end face 131 and the second end face 610 through the sealing member 400. When the second end face 610 is compressed, the wire clamp 600 deforms, thereby forming an effective seal between the first end cover 200 and the stator assembly 100, and between the wire clamp 600 and the stator assembly 100, resulting in improved sealing performance. It should be noted that with an interference fit between the first end cover 200 and the flange 130 of the plastic-molded casing 110, additional restraint is provided for the wire clamp 600, thus enhancing the overall structural stability.

The wire clamp 600 in this embodiment is made of silicone or rubber, which offers good sealing performance. Taking the wire clamp 600 made of silicone as an example, the wire clamp 600 and the wire harness 700 can be formed in an integral structure through injection molding. In detail, in the injection molding process, the wire harness 700 is put into a mold cavity first, and the wire clamp 600 envelops the wire harness 700 when formed in the mold cavity, achieving a seal between the wire clamp 600 and the wire harness 700. Additionally, the adjacent wires are kept apart, ensuring a high level of sealing between each of the wires and the wire clamp 600, and the assembly is facilitated once the wire clamp 600 and the wire harness 700 are integrally molded, thus the assembly efficiency is further increased. In addition, while the wire harness 700 and the wire clamp 600 are injection-molded, an end of the wire harness 700 facing the interior of the stator assembly 100 needs to protrude from the wire clamp 600 by a specific distance to guarantee the producibility of welding the wire harness 700 to a circuit board.

Referring to FIG. 3, it should be noted that, in this embodiment, a protrusion height of the second end face 610 with respect to the first end face 131 is h, which satisfies: h ≥ 0. 5 mm, that is to say, the height difference between the first end face 131 and the second end face 610 needs to be greater than or equal to 0.5 mm, allowing the first end cover 200 to exert sufficient compressive force on the wire clamp 600, thereby improving the sealing performance. It can be understood that FIG. 3 shows a schematic diagram where the first end cover 200 is not mounted yet, at that time the second end face 610 protrudes above the first end face 131. When the first end cover 200 and the sealing member 400 are assembled in place, the wire clamp 600 deforms under pressure, causing the second end face 610 to be pressed downward. If the protrusion height of the second end face 610 with respect to the first end face 131 is not sufficient, the second end face 610 may shift to align with the first end face 131, resulting in insufficient deformation of the wire clamp 600, thus adversely affecting the seal between the wire clamp 600 and the wire trough 140.

In some embodiments, the wire clamp 600 has an elastic modulus, represented by e, which satisfies: 1.2 MPa ≤ e ≤ 5.4 MPa. It can be understood that when an external force is applied to the elastic member, the elastic member will deform, and the elastic modulus is understood as the ratio of stress to strain in a given direction under a uniaxial stress state. In the elastic deformation stage, the stress and strain of a material are in a proportional relationship, with the proportionality constant known as the elastic modulus. The elastic modulus serves as an indicator of how easily a material can undergo elastic deformation; a larger value indicates that greater stress is required to achieve a certain level of elastic deformation, meaning the material is stiffer. Consequently, under a given stress, the elastic deformation will be smaller, reflecting the resistance of the material to elastic deformation. By setting the elastic modulus of the wire clamp 600 to satisfy the condition of 1.2 MPa ≤ e ≤ 5.4 MPa, the wire clamp 600 has good elastic deformation ability, ensuring it has a tighter fit with the plastic-molded casing 110 when compressed. The wire clamp 600 may be made of silicone or rubber, and the specific elastic modulus value may be selected based on the sealing requirements for different materials and applications.

In some embodiments, a hardness of the wire clamp 600 is represented by c, which satisfies: 30 HA ≤ c ≤ 70 HA. It can be understood that the hardness reflects the compression resistance of the wire clamp 600. The smaller the hardness, the more easily the wire clamp 600 deforms. Conversely, greater hardness makes deformation more difficult. Both excessively low and excessively high hardness may adversely affect the sealing performance between the wire clamp 600 and the plastic-molded casing 110. Further, as shown in FIG. 4, when the wire clamp 600 deforms, an over rigid fit is created between a side wall of the wire clamp 600 and a side wall of the installation groove 210 and generates a strong bonding force. The hardness of the wire clamp 600 affects its bonding strength with the first end cover 200.

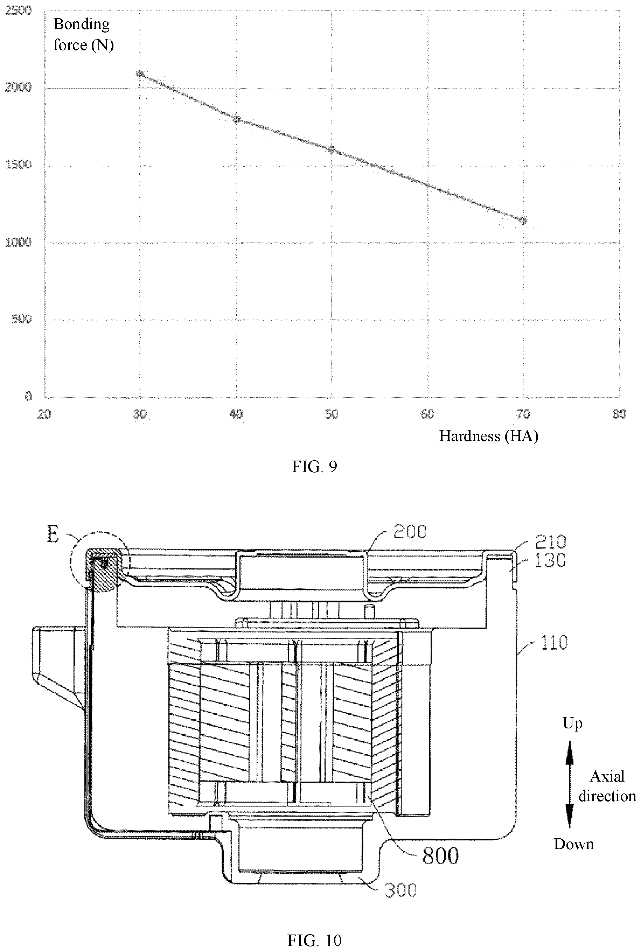

Taking the wire clamp 600 made of silicone as an example, it can be understood with reference to FIG. 9 that in this embodiment, the hardness value of Shore hardness is used as a reference value, and the preferred hardness is in the range of 30 HA to 70 HA. When the wire clamp 600 falls within the above hardness range, the bonding force between the wire clamp 600 and the first end cover 200 may reach 1000 N to 2000 N, ensuring more stable assembly and better sealing performance.

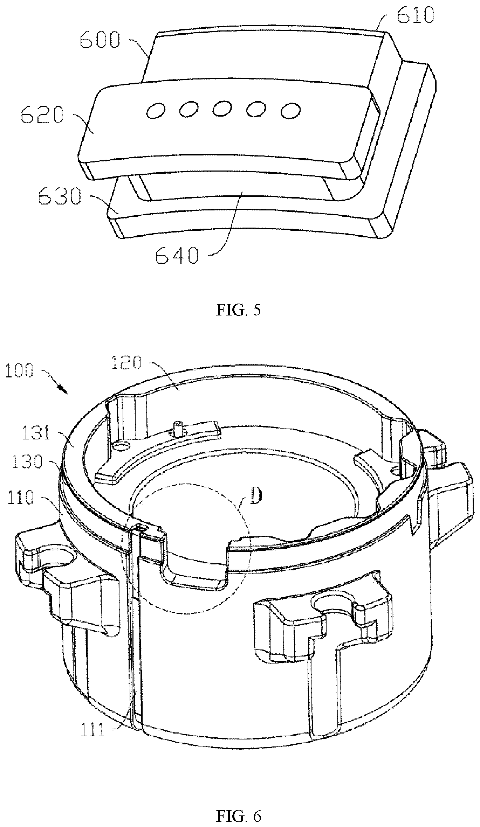

Referring to FIG. 5, an edge on one side of the wire clamp 600 extends outward to form a first limiting part 620, and an edge on the other side of the wire clamp 600 extends outward to form a second limiting part 630. The first limiting part 620 engages with the outer side wall of the plastic-molded casing 110, and the second limiting part 630 engages with an inner side wall of the plastic-molded casing 110, providing positioning for the wire clamp 600 in a radial direction of the stator assembly 100. A first groove 640 is formed between the first limiting part 620 and the second limiting part 630, and has a bottom surface fitted to the inner wall of the wire trough 140, for improved stability of the assembly structure of the wire clamp 600.

It should be noted that the first limiting part 620 and the second limiting part 630 have a substantially plate shape and are integrally formed with the wire clamp 600 through injection molding. Both the first limiting part 620 and the second limiting part 630 are closely attached to the side wall of the plastic-molded casing 110, providing a certain level of sealing effectiveness, which helps enhance the sealing performance between the wire clamp 600 and the plastic-molded casing 110.

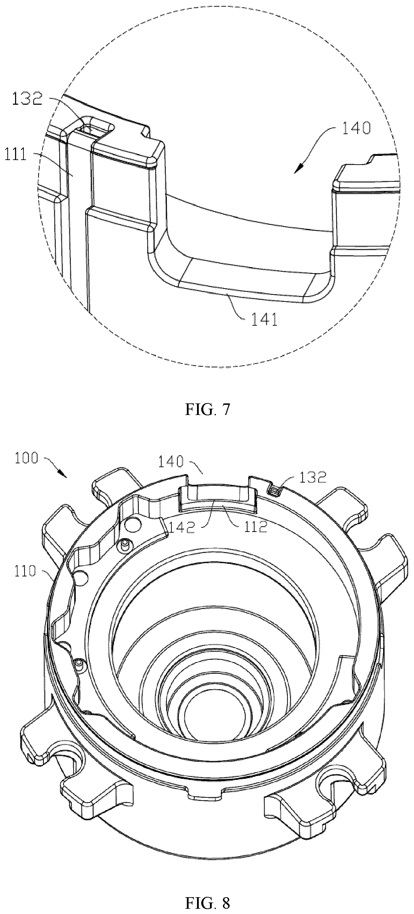

Referring to FIGS. 6 and 8, the plastic-molded casing 110, on the inner side wall thereof, is provided with a second groove 112 at a position close to the wire trough 140, and the second groove 112 extends along an edge of the wire trough 140. When the wire clamp 600 is inserted into the wire trough 140, the second stopping portion 630 fits into the second groove 112 correspondingly. In the radial direction of the stator assembly 100, a thickness of the second limiting part 630 is smaller than a depth of the second groove 112, such that the second limiting part 630 does not protrude above the inner side wall of the plastic-molded casing 110, thereby not occupying the internal space of the stator assembly 100, resulting in a more rational structure.

In this embodiment, a first chamfer structure 141 is provided between the inner wall of the wire trough 140 and the outer side wall of the plastic-molded casing 110, and a second chamfer structure 142 is provided between the inner wall of the wire trough 140 and the inner side wall of the plastic-molded casing 110, that is, the inner wall of the wire trough 140 is connected to the outer side wall of the plastic-molded casing 110 through the first chamfer structure 141, and the inner wall of the wire trough 140 is connected to the inner side wall of the plastic-molded casing 110 through the second chamfer structure 142. The wire clamp 600 is mounted within the wire trough 140, with an inner wall of the first groove 640 fitting closely against the inner wall of the wire trough 140. The first chamfer structure 141 and the second chamfer structure 142 help improve the sealing performance at corners, resulting in better sealing effectiveness.

Another embodiment of the present application provides an electric device (not shown in the drawings), which may be a household appliance such as an air conditioner, and employs the electric motor 1000 described in the above embodiment as a driving component.

In detail, the plastic-molded casing 110 of the stator assembly 100 of the electric motor 1000 is formed through injection molding, and the first end cover 200 and the second end cover 300 at two ends of the stator assembly 100 are interconnected by the conductive member 500, such that an equivalent capacitance of the electric motor 1000 is reduced, thereby lowering a shaft voltage and reducing electric corrosion, resulting in a longer service life of the bearing 810. The wire trough 140 is arranged at the opening 120 of the plastic-molded casing 110, and the elastic wire clamp 600 is disposed inside the wire trough 140. The wire clamp 600 can secure the wires extending from the wire trough 140. When the wire clamp 600 is mounted into the wire trough 140, the second end face 610 of the wire clamp 600 is above the first end face 131 of the plastic-molded casing 110. While assembled, the first end cover 200 presses against the second end face 610 at the opening 120, causing the wire clamp 600 to deform. This results in a tight fit between the wire clamp 600 and the wire trough 140, forming an effective sealing structure that enhances the seal between the wire clamp 600 and the stator assembly 100, significantly reducing the risk of water ingress at the wire outlet points of the electric motor 1000 under harsh conditions, improving the operational reliability of the electric motor 1000, and stabilizing the operation of the electric device.

In addition, in the existing technology, at the opening of the plastic-molded casing, the conductive member may be connected to the end cover through the plastic-molded casing, or the conductive member may be fastened onto the plastic-molded casing and connected to the end cover, for electrical connection between the conductive member and the end cover. However, in the above structures, the conductive member needs to enter the installation space in the stator assembly, resulting in gaps between the conductive member and the end cover, and between the conductive member and the plastic-molded casing, which reduces the overall sealing performance of the stator assembly. It can be understood that, as the application scenarios for the household appliances equipped with the electric motors are rapidly expanding, the variety of environments in which electric motors operate has also grown, and greater attention should be paid to its reliability under harsh conditions since its design process, particularly regarding the issue of water ingress at the connection point between the conductive member and the end cover under conditions such as rain, which may cause decreased performance or even inability to function properly. In view of the above problems, in the embodiment of the present application the installation structure of the conductive member 500 at the opening 120 is optimized, thereby effectively enhancing the sealing performance of the electric motor 1000 at the connection point of the conductive member 500, reducing the incidence of water ingress, and improving the operational reliability of the electric motor 1000.

In detail, referring to FIG. 10 which is a sectional view of the electric motor 1000 according to an embodiment, the first end cover 200 and the plastic-molded casing 110 are connected through an interference fit, and the edge of the first end cover 200 is pressed against the end face 131 of the plastic-molded casing 110 at the opening 120, connecting an end portion of the conductive member 500 to the end face 131. This arrangement secures the upper end of the conductive member 500 and establishes an electrical connection between the conductive member 500 and the first end cover 200.

It can be understood that, in some embodiments, the upper end of the conductive member 500 may extend to a position near a center of the end face 131, and the upper end of the conductive member 500 may be pressed against the end face 131 by the first end cover 200, or the conductive member 500 and the end face 131 may be fixedly connected by glue or the like. Referring to FIGS. 2 and 4, it is not necessary to extend the conductive member 500 into the internal space of the stator assembly 100, the conductive member 500 covers part of the end face 131 in the radial direction of the stator assembly 100, and the end face 131 between the conductive member 500 and the inner side wall of the plastic-molded casing 110 is not covered by the conductive member 500, that is, part of the end face 131 remains as a sealing surface at the connection point of the conductive member 500, thereby reducing the influence of the conductive member 500 on the sealing performance between the first end cover 200 and the end face 131. Compared to a fixing structure where the conductive member 500 extends into the internal space of the stator assembly 100, the risk of water ingress of the present application is lowered, resulting in better sealing performance.

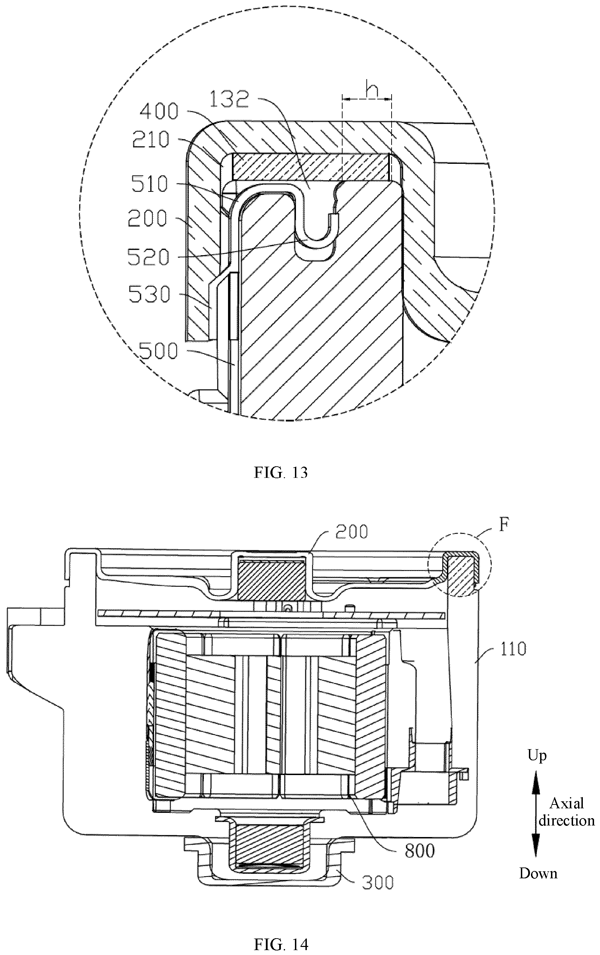

Referring to FIGS. 10 and 13, in this embodiment, a sealing structure is provided between the first end cover 200 and the end face 131, and the sealing structure may be a sealing ring, a sealant or the like, such that a seal is formed between the first end cover 200 and the end face 131. It can be understood that since the conductive member 500 does not cross the end face 131 in the radial direction, that is, the integrity of the end face 131 in a circumferential direction of the stator assembly 100 is maintained, more effective sealing is achieved between the first end cover 200 and the plastic-molded casing 110 in the circumferential direction, resulting in high sealing performance, thereby effectively addressing the issue of water ingress at the connection point of the conductive member 500 under harsh conditions and improving the operational reliability of the electric motor 1000.

In detail, in the embodiments shown in FIGS. 10 and 13, the sealing structure includes a sealing member 400, which may specifically be a silicone or rubber sealing ring, the sealing member 400 is mounted between the first end cover 200 and the end face 131 of the plastic-molded casing 110, and is pressed by the first end cover 200 and the plastic-molded casing 110 to form a seal between an upper surface of the sealing member 400 and the first end cover 200, and a seal between a lower surface of the sealing member 400 and the end face 131 of the plastic-molded casing 110.

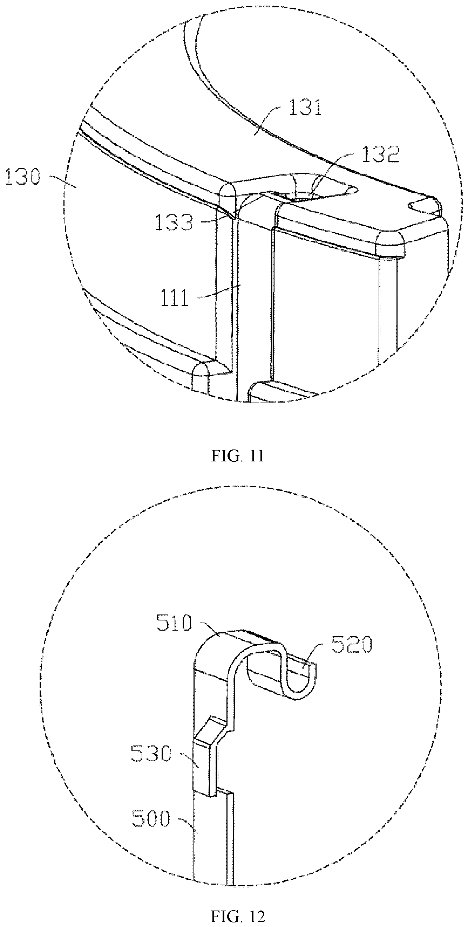

Referring to FIGS. 1 and 11, in some embodiments, a retention slot 132 is provided on the end face 131. The retention slot 132 extends from the end face 131 in the axial direction of the stator assembly 100, and is spaced from the inner side wall of the plastic-molded casing 110. The upper end of the conductive member 500 fits into the retention slot 132, such that the conductive member 500 is connected to the end face 131 and can be fixed without extending into the interior of the stator assembly 100. As shown in FIG. 14, it can be understood that when the conductive member 500 is mounted in place, the conductive member 500 is bent and fastened onto a side wall of the retention slot 132, and the first end cover 200 presses the sealing member 400, causing the sealing member 400 to press tightly against the upper end of the conductive member 500, such that the upper end of the conductive member 500 fits into the retention slot 132, ensuring a stable and reliable structure that effectively prevents the conductive member 500 from disengaging from the retention slot 132. Additionally, effective sealing is achieved between the sealing member 400 and the conductive member 500, reducing the risk of water ingress between the sealing member 400 and the conductive member 500.

It should be noted that, as shown in FIG. 13, in this embodiment, in the radial direction of the stator assembly 100, a distance between the retention slot 132 and the inner side wall of the plastic-molded casing 110 is represented by h, which satisfies: h ≥ 1 mm, that is, in the radial direction at the connection point of the conductive member 500 the end face 131 has a width at least greater than or equal to 1 mm, ensuring a sufficiently large sealing area, and the lower surface of the sealing member 400 and the end face 131 are closely fitted to form a seal, such that the sealing member 400 can provide an effective seal between the first end cover 200 and the plastic-molded casing 110 in the circumferential direction of the stator assembly 100, meeting the sealing requirements under harsh conditions.

Referring to FIG. 12, it can be understood that the conductive member 500 includes a first bent section 510 and a second bent section 520. The first bent section 510 extends from the outer side wall of the plastic-molded casing 110 to the first bent section 510 of the retention slot 132, and covers part of the end face 131 in the radial direction. Considering that the conductive member 500 has a certain thickness, a groove corresponding to the first bent section 510 is formed on the end face 131. The first bent section 510 extends into the retention slot 132 along the groove, ensuring that while mounted, the first bent section 510 is does not protrude above the end face 131. This minimizes the impact of the first bent section 510 on the sealing member 400 when the sealing member 400 abuts against the end face 131, helping to maintain the stability of the seal between the sealing member 400 and the end face 131.

Referring to FIG. 11, in some embodiments, the connection of the outer side wall of the plastic-molded casing 110 and the retention slot 132 is transited through a first groove 133, a bottom surface of the first groove 133 is lower than the end face 131 in the axial direction of the stator assembly 100, and at a transition position between the first groove 133 and the plastic-molded casing 110, and at a transition position between the first groove 133 and the inner wall of the retention slot 132, chamfers are provided to improve the assembly stability of the conductive member 500. It should be noted that the plastic-molded casing 110, on the outer side wall thereof, is provided with a receiving groove 111 for receiving the conductive member 500, the receiving groove 111 extends in the axial direction of the stator assembly 100, and the conductive member 500 is mounted in the receiving groove 111, with two ends connected to the first end cover 200 and the second end cover 300 respectively, such that the stability of the assembly structure of the conductive member 500 is improved.

Referring to FIGS. 12 and 13, an end of the first bent section 510 extends and bends to form the second bent section 520, and the second bent section 520 is positioned in the retention slot 132 and in an interference fit with the retention slot 132. In detail, the first bent section 510 is U-shaped and positioned in the first groove 133, the second bent section 520 is U-shaped, and two ends of the second bent section 520 respectively abut against two side walls of the retention slot 132, achieving the interference fit between the second bent section 520 and the retention slot 132. This design eliminates the need for additional connecting components, adhesive bonding, or other methods to secure the conductive member 500, further enhancing the stability of the installation structure of the conductive member 500 and making assembly simple and efficient.

Referring to FIGS. 1 and 10, in some embodiments, the plastic-molded casing 110 is provided with an annular flange 130 at the opening 120, the end face 131 is arranged on a surface of the flange 130 in the axial direction, an edge of the first end cover 200 is bent circumferentially to form an annular installation groove 210, and the flange 130 is in an interference fit with the installation groove 210. This arrangement allows the first end cover 200 to be securely attached to the flange 130. As can be understood, with reference to FIG. 5, the sealing member 400 is positioned between the bottom surface of the installation groove 210 and the end face 131. During assembly, the sealing member 400 is pre-installed in the installation groove 210, and the first end cover 200 is placed over the opening 120, causing the flange 130 to fit into the installation groove 210. An insertion depth of the flange 130 into the installation groove 210 is controlled by the pressure applied to the first end cover 200, causing upper and lower surfaces of the sealing member 400 to be compressed properly, thus forming a sealing structure which creates a good sealing effect at the connection point of the conductive member 500. In addition, with an interference fit between the first end cover 200 and the flange 130 of the plastic-molded casing 110, additional restraint is provided for the conductive member 500, thus enhancing the overall structural stability.

Referring to FIGS. 12 and 13, the conductive member 500 is provided with a convex elastic piece 530, and the elastic piece 530 is positioned on an outer side of the plastic-molded casing 110 and abuts against a side wall of the installation groove 210, such that the conductive member 500 and the first end cover 200 are electrically connected. It can be understood that one end of the elastic piece 530 is connected to a main body of the conductive member 500, and the other end of the elastic piece 530 extends and protrudes above a surface of the conductive member 500, providing the elastic piece 530 a certain degree of elasticity. The elastic piece 530 and the conductive member 500 are integrally formed. During assembly, the upper end of the conductive member 500 is snapped into the retention slot 132, and then the first end cover 200 is pressed into the flange 130. When the first end cover 200 presses the conductive member 500, the elastic piece 530 deforms under pressure and abuts against the side wall of the installation groove 210 to ensure the stable conductivity between the conductive member 500 and the first end cover 200.

Referring to FIG. 13, it can be understood that in this embodiment, the sealing member 400 is made of silicone or rubber and has certain elasticity, and while assembled, the sealing member 400 deforms under the pressure by the first end cover 200 and the end face 131. At the position where the conductive member 500 is mounted, the sealing member 400 is pressed toward the conductive member 500, such that a seal is provided between the sealing member 400 and the conductive member 500. In some embodiments, the hardness c of the sealing member 400 preferably satisfies: 30 HA ≤ c ≤ 50 HA. It can be understood that the hardness reflects the compression resistance of the sealing member 400. The smaller the hardness, the more easily the sealing member 400 deforms. Conversely, greater hardness makes deformation more difficult. Excessively low or excessively high hardness may adversely affect the sealing performance of the sealing member 400.

Referring to FIG. 13, taking the sealing member 400 made of silicone as an example, when the sealing member 400 is pressed, a seal can be provided between the first end cover 200 and the plastic-molded casing 110. The hardness of the sealing member 400 affects its bonding strength with the first end cover 200. In this embodiment, the hardness value of Shore hardness is used as a reference value, and the preferred hardness is in the range of 30 HA to 50 HA. For example, the Shore hardness value of the sealing member 400 may be 30 HA, 35 HA, 50 HA, etc. When the sealing member 400 falls within the above hardness range, the bonding force between the sealing member 400 and the first end cover 200 may reach 1500 N to 2000 N, ensuring better sealing performance. As the hardness value increases, the bonding force between the sealing member 400 and the first end cover 200 gradually decreases, and when the hardness exceeds 50 HA, the bonding force decreases to a level below 1500 N, which affects the sealing performance.

It can be understood that, in some embodiments, an adhesive material may be used instead of the sealing member 400. The adhesive material has a degree of viscosity and can bond a groove bottom of the installation groove 210 to the end face 131 to establish a seal. The adhesive material may be a sealant or other glue having sealing properties, which is not limited here.

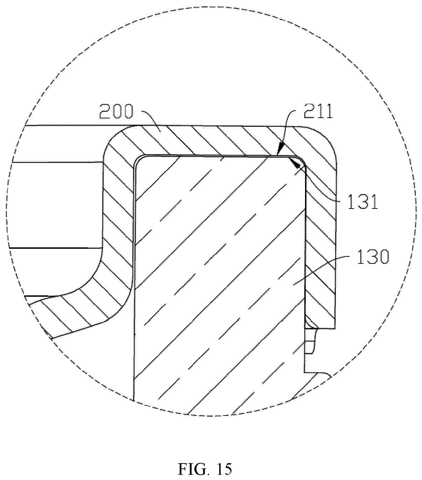

Referring to FIGS. 14 and 15, in some embodiments, the groove bottom of the installation groove 210 is a first sealing surface 211, the end face 131 is a second sealing surface, and the first sealing surface 211 and the second sealing surface are fitted to form the sealing structure. In detail, by applying pressure to the first end cover 200, the first end cover 200 presses the plastic-molded casing 110, forming an assembly structure of interference fit. This creates an interference fit between the first sealing surface 211 and the second sealing surface, resulting in a tight fit. For example, the end face 131 may be convex to form a second sealing surface with a curved profile, and the first sealing surface 211 and the second sealing surface are pressed against each other to generate certain deformation, such that the first sealing surface 211 and the second sealing surface are more closely fitted for a more effective sealing structure.

Another embodiment of the present application provides an electric device (not shown in the drawings), which may be a household appliance such as an air conditioner, and employs the electric motor 1000 described in the above embodiment as a driving component.

In detail, the stator assembly 100 of the electric motor 1000 includes the plastic-molded casing 110 formed by injection molding, and the first end cover 200 and the second end cover 300 at two ends of the stator assembly 100 are interconnected by the conductive member 500, such that an equivalent capacitance of the electric motor 1000 is reduced, thereby lowering a shaft voltage and reducing electric corrosion, resulting in a longer service life of the bearing. The end of the conductive member 500, which is connected to the first end cover 200, is fixed to the end face 131 of the plastic-molded casing 110 at the opening 120, and there is no need to extend the conductive member 500 into the internal space of the stator assembly 100. A sealing structure is provided between the first end cover 200 and the end face 131 to improve the sealing performance between the first end cover 200 and the stator assembly 100, such that the connection point of the conductive member 500 on the first end cover 200 is effectively sealed, thereby effectively addressing the issue of water ingress at the connection point of the conductive member 500 under harsh conditions, leading to more stable operation of the electric motor 1000 and improving the operational reliability of the electric device.

Although the embodiments of the present application have been described in detail above with reference to the accompanying drawings, the present application is not limited to the above embodiments, and various changes may be made within the knowledge of those of ordinary skill in the art without departing from the purpose of the present application.

## Claims

1. An electric motor, comprising:
a stator assembly, comprising a plastic-molded casing which is open at an end in an axial direction of the stator assembly to form an opening, wherein an end face of the plastic-molded casing at the opening is a first end face, and the plastic-molded casing, on a side wall thereof, is provided with a wire trough extending in the axial direction of the stator assembly from the first end face;
an end cover, arranged to cover the opening; and
a wire clamp, which is an elastic member and arranged in the wire trough for securing wires, wherein an end face of the wire clamp facing the end cover is a second end face, and the second end face protrudes with respect to the first end face in the axial direction of the stator assembly, allowing the wire clamp to deform under pressure from the end cover to seal the wire trough.

2. The electric motor of claim 1, wherein the second end face has a protrusion height with respect to the first end face, h, satisfying: h ≥ 0.5 mm.

3. The electric motor of claim 1 or 2, wherein in a radial direction of the stator assembly, the wire clamp, on a side thereof, is provided with a first limiting part engaging with an outer side wall of the plastic-molded casing, and on another side thereof, is provided with a second limiting part engaging with an inner side wall of the plastic-molded casing.

4. The electric motor of claim 3, wherein a first groove is formed between the first limiting part and the second limiting part, and a bottom surface of the first groove fits an inner wall of the wire trough.

5. The electric motor of claim 3 or 4, wherein the plastic-molded casing, on the inner side wall thereof, is provided with a second groove for receiving the second limiting part at a position close to the wire trough, and in the radial direction of the stator assembly, the second limiting part has a thickness smaller than a depth of the second groove.

6. The electric motor of any one of claims 1 to 5, wherein a first chamfer structure is arranged between the inner wall of the wire trough and the outer side wall of the plastic-molded casing, and a second chamfer structure is arranged between the inner wall of the wire trough and the inner side wall of the plastic-molded casing.

7. The electric motor of any one of claims 1 to 6, wherein the wires constitute a wire harness, and the wire clamp and the wire harness are formed in an integral structure through injection molding.

8. The electric motor of any one of claims 1 to 7, wherein the wire clamp is made of silicone or rubber.

9. The electric motor of any one of claims 1 to 8, wherein the wire clamp has an elastic modulus, e, satisfying: 1.2 MPa ≤ e ≤ 5.4 MPa.

10. The electric motor of any one of claims 1 to 9, wherein the wire clamp has a hardness, c, satisfying: 30 HA ≤ c ≤ 70 HA.

11. An electric motor, comprising:
a stator assembly, comprising a plastic-molded casing, wherein the plastic-molded casing is open at an end in an axial direction of the stator assembly to form an opening;
a first end cover, arranged to cover the opening;
a second end cover, arranged at an end of the plastic-molded casing away from the first end cover; and
a conductive member, of which one end is fixed on an end face of the plastic-molded casing at the opening and electrically connected to the first end cover, and another end is electrically connected to the second end cover, wherein a sealing structure is provided between the first end cover and the end face.

12. The electric motor of claim 11, wherein the end face is provided with a retention slot spaced from an inner side wall of the plastic-molded casing, and the conductive member has an end secured in the retention slot.

13. The electric motor of claim 12, wherein the conductive member comprises a first bent section extending from an outer side wall of the plastic-molded casing to the retention slot, and a second bent section located in the retention slot and in an interference fit with the retention slot.

14. The electric motor of claim 12 or 13, wherein a distance, h, between the retention slot and the inner side wall of the plastic-molded casing, satisfies: h ≥ 1 mm.

15. The electric motor of any one of claims 11 to 14, wherein the plastic-molded casing is provided with an annular flange at the opening, the first end cover is provided with an installation groove in an interference fit with the flange, the end face is formed on a surface of the flange in the axial direction of the stator assembly, and the sealing structure is positioned between a groove bottom of the installation groove and the end face.

16. The electric motor of claim 15, wherein the sealing structure comprises a sealing member made of silicone or rubber.

17. The electric motor of claim 15 or 16, wherein the sealing structure comprises a sealing member of a hardness, c, satisfying: 30 HA ≤ c ≤ 50 HA.

18. The electric motor of any one of claims 15 to 17, wherein the sealing structure is an adhesive material disposed between the groove bottom of the installation groove and the end face.

19. The electric motor of any one of claims 15 to 18, wherein the groove bottom of the installation groove is a first sealing surface, the end face is a second sealing surface, and the first sealing surface fits against the second sealing surface to form the sealing structure.

20. The electric motor of any one of claims 15 to 19, wherein the conductive member is provided with a convex elastic piece positioned on an outer side of the plastic-molded casing and abutting against a side wall of the installation groove.

21. An electric device, comprising the electric motor of any one of claims 1 to 10 or claims 11 to 20.
